# EUROPÄISCHE PATENTANMELDUNG

(11) **EP 0 664 146 A2**
(43) Veröffentlichungstag der Anmeldung: **26.07.1995**
(21) Anmeldenummer: 94203213.7
(22) Anmeldetag: 04.11.1994
(51) Int. Cl.: B01D 53/50, B01D 53/68, B01D 53/64

(54) **Verfahren zur Reinigung von Abgasen der Abfallverbrennung**

(30) Priorität: 23.12.1993 DE 4344113
(71) Anmelder: METALLGESELLSCHAFT AG, D-60323 Frankfurt am Main (DE)
(72) Erfinder: Reiss, Günter, D-61440 Oberursel (DE); Schaub, Georg, Dr., D-61440 Oberursel (DE)

(57) **Zusammenfassung**

Es wird ein Verfahren zur Reinigung des bei der Verbrennung von Müll, Industrieabfällen und Klärschlamm anfallenden Abgases beschrieben. Das Abgas ist insbesondere mit Staub, SO₂, HCl, HF, Hg, Quecksilberverbindungen sowie Dioxinen und Furanen verunreinigt und hat einen bestimmten Sauerstoffgehalt. Das Verfahren arbeitet in der Weise, daß das Abgas in einem Sprühabsorber mit einer Ca(OH)₂-Suspension behandelt wird, daß das Abgas anschließend in zwei Stufen filtriert wird, wobei das aus der ersten Filtrationsstufe austretende Abgas noch einen SO₂-Gehalt von 20 bis 500 mg/Nm³ hat und wobei vor der zweiten Filtrationsstufe Aktivkohle, vorzugsweise Herdofenkoks, in den Abgasstrom eingebracht wird, und daß das Abgas schließlich mit einer Mischung gewaschen wird, die Wasser sowie NaOH, Na₂CO₃, Ca(OH)₂ und/oder CaCO₃ in gelöster oder suspendierter Form enthält.

## Beschreibung

Die Erfindung betrifft ein Verfahren zur Reinigung von sauerstoffhaltigem Abgas, das bei der Verbrennung von Müll, Industrieabfällen und Klärschlamm anfällt und das mit Staub, SO₂, HCl, HF, Schwermetallen, insbesondere Hg und Quecksilberverbindungen, sowie mit Dioxinen und Furanen verunreinigt ist.

Wegen der unterschiedlichen und wechselnden Zusammensetzung von Müll, Industrieabfällen und Klärschlamm sind auch die bei der Verbrennung dieser Abfälle entstehenden Abgase mit unterschiedlichen Mengen umweltbelastender Substanzen verunreinigt. Alle Verunreinigungen müssen weitgehend aus den Verbrennungsabgasen entfernt werden, bevor die Abgase in die Atmosphäre entlassen werden können, denn sehr viele Verunreinigungen entfalten bereits in geringer Konzentration toxische Wirkungen gegenüber Menschen, Tieren und Pflanzen. Die bei der Abfallverbrennung anfallenden Abgase sind insbesondere mit Staub, SO₂, HCl, HF, Hg, Quecksilberverbindungen sowie Dioxinen und Furanen verunreinigt. Neben diesen Substanzen liegen in den Verbrennungsabgasen noch NOₓ, Schwermetallverbindungen und hochkondensierte aromatische Kohlenwasserstoffe als weitere Verunreinigungen vor. Da die Abfälle mit einem stöchiometrischen Überschuß an Sauerstoff verbrannt werden, enthalten die Verbrennungsabgase 2 bis 11 Vol.-% Sauerstoff.

Der Staub, der in den Abgasen in einer Menge bis zu 50 000 mg/Nm³ vorliegt, wird in Zyklonen, Elektrofiltern, Gewebefiltern oder Wäschern abgeschieden, wobei das zu entstaubende Abgas auch mehrere dieser Apparate durchlaufen kann. Die bekannten Entstaubungsverfahren lassen heute auch im großtechnischen Maßstab Reststaubgehalte von < 5 mg/Nm³ zu. Eine möglichst weitgehende Entstaubung ist deshalb erforderlich, weil der Staub vor allem toxisch wirkende Schwermetalle, Schwermetallverbindungen und polyhalogenierte Dibenzodioxine und Dibenzofurane adsorbiert.

SO₂ und HCl liegen in den Abgasen in einer Menge von jeweils bis zu 3000 mg/Nm³ vor; außerdem ist HF in Mengen bis zu 100 mg/Nm³ vorhanden. Diese gasförmigen Verbindungen bilden mit dem in der Atmosphäre enthaltenen Wasserdampf Säuren, die sehr häufig als Aerosole vorliegen, und haben eine toxische Wirkung. Sie werden daher weitgehend abgetrennt, wobei mit den bekannten Reinigungsverfahren im technischen Maßstab SO₂-Restgehalte < 20 mg/Nm³, HCl-Restgehalte < 5 mg/Nm³ und HF-Restgehalte < 1 mg/Nm³ verwirklicht werden können. Zur Abtrennung von SO₂, HCl und HF werden trocken, quasi-trocken und naß arbeitende Reinigungsverfahren eingesetzt, wobei auch mehrere Verfahren hintereinander geschaltet werden können. Bei diesen Verfahren wird als Reaktionsmittel vor allem Ca(OH)₂, CaO, CaCO₃, NaOH und Na₂CO₃ verwendet. Besondere Bedeutung hat die Sprühabsorption erlangt, bei der eine wäßrige Suspension von Ca(OH)₂ mit den sauren Schadstoffen SO₂, HCl und HF reagiert, das Wasser verdampft und ein festes Reaktionsprodukt anfällt, das auch Staub und andere Schadstoffe enthält. Daneben sind Waschverfahren bekannt, die eine sehr weitgehende Abscheidung der Schadstoffe SO₂, HCl und HF zulassen.

Die Schwermetalle und die Schwermetallverbindungen, vor allem Quecksilber und Quecksilberverbindungen, sowie die polyhalogenierten Dibenzodioxine und Dibenzofurane liegen in den Verbrennungsabgasen in geringerer Konzentration vor. Diese Substanzen wirken allerdings extrem toxisch und müssen daher nahezu quantitativ aus den Abgasen entfernt werden, was nach dem Stand der Technik vorzugsweise durch Adsorptions- und/oder Waschverfahren erfolgt. Als Adsorptionsmittel hat sich insbesondere Aktivkohle bewährt, während die Waschverfahren sowohl im sauren als auch im alkalischen Bereich arbeiten. Dioxine und Furane werden außerdem durch katalytische Umwandlung zersetzt.

Die technische Anwendbarkeit der bekannten Abgasreinigungsverfahren hängt insbesondere davon ab, daß sie möglichst geringe Investitions- und Betriebskosten verursachen und daß sie Verfahrensprodukte liefern, die in möglichst geringer Menge anfallen und ohne größere Schwierigkeiten deponiert werden können. Um einen möglichst großen Abscheidungsgrad für die vorgenannten Verunreinigungen zu erzielen, ist es üblich, daß mehrere Reinigungsverfahren miteinander kombiniert werden.

Beispielsweise ist aus der EP-PS 0 253 563 ein Verfahren zur Beseitigung von Quecksilberdampf und/oder Dampf schädlicher organischer Verbindungen und/oder Stickstoffoxiden aus einem von einer Verbrennungsanlage abgehenden heißen Abgasstrom bekannt, der außerdem Flugasche und saure Bestandteile - also SO₂ und HCl - enthält. Bei diesem bekannten Verfahren wird der zu reinigende Abgasstrom bei einer Temperatur von 135 bis 400°C in eine Zerstäubungs-Absorptionskammer geleitet, in der eine wäßrige Flüssigkeit zerstäubt wird, die ein basisches Absorptionsmittel enthält. Das Abgas kühlt sich im Sprühabsorber durch Verdampfung des Wassers auf 180 bis 90°C ab, und gleichzeitig werden die sauren Bestandteile aus dem Abgas gebunden, wobei ein partikelförmiges Material gebildet wird, das die Reaktionsprodukte zwischen dem basischen Absorptionsmittel und den sauren Bestandteilen des Abgases sowie nicht umgesetztes Absorptionsmittel enthält. Das partikelförmige Reaktionsprodukt wird zusammen mit evtl. vorhandener Flugasche in einem Partikelabscheider stromabwärts zur Zerstäubungs-Absorptionskammer von dem Abgas getrennt. Beim bekannten Verfahren ist vorgesehen, daß pulverförmiger aktiver Kohlenstoff in einer Menge von 1 bis 800 mg/Nm³ Abgas zumindest an einer Stelle, die stromaufwärts der Zerstäubungs-Absorptionskammer, in der Zerstäubungs-Absorptionskammer oder stromabwärts zur Zerstäubungs-Absorptionskammer, aber stromaufwärts zum Partikelabscheider, in den Abgasstrom eingebracht wird. Der pulverförmige aktive Kohlenstoff wird zusammen mit den partikelförmigen Reaktionsprodukten im partikelabscheider abgetrennt.

Ferner ist aus der DE-PS 40 12 320 ein Verfahren zur Reinigung von Abgasen, die außer Flugasche noch gasförmige Schadstoffe, wie SO₂, HCl und HF, sowie flüchtige Schwermetalle, insbesondere Quecksilberverbindungen, enthalten, bekannt. Bei diesem bekannten Verfahren erfolgt zunächst eine Feststoffabscheidung auf trockenem Weg und anschließend eine zweistufige Waschung mit im Kreislauf geführter Waschflüssigkeit, wobei die erste Waschstufe bei einem pH-Wert von 0 bis 3 und die zweite Waschstufe bei einem pH-Wert von 6 bis 9 betrieben wird.

Es hat sich gezeigt, daß die bekannten Reinigungsverfahren wegen der gestiegenen Anforderungen an die Reinigungsleistung verbessert werden müssen. Ferner hat sich gezeigt, daß bei den bekannten Reinigungsverfahren kurzfristige Überschreitungen der im Reingas einzuhaltenden Schadstoffkonzentrationen eintreten, die insbesondere auf Schwankungen der Konzentration einzelner Schadstoffe in den Verbrennungsabgasen zurückzuführen sind und die im Hinblick auf mögliche Gefährdungen vermieden werden müssen.

Der Erfindung liegt daher die Aufgabe zugrunde, ein Verfahren zur Reinigung der bei der Verbrennung von Müll, Industrieabfällen und Klärschlamm anfallenden Abgase zu schaffen, das auch bei Schwankungen der einzelnen Schadstoffkonzentrationen zuverlässig die Einhaltung von niedrigen Schadstoffkonzentrationen im Reingas gestattet und das wirtschaftlich arbeitet. Das Verfahren muß insbesondere gewährleisten, daß das Reingas eine Staubkonzentration < 10 mg/Nm³, eine SO₂-Konzentration < 30 mg/Nm³, eine HCl-Konzentration < 10 mg/Nm³, eine HF-Konzentration < 1 mg/Nm³, eine Hg-Konzentration < 0,05 und eine Konzentration an polyhalogenierten Dibenzodioxinen und Dibenzofuranen < 0,1 ng enthält.

Die der Erfindung zugrundeliegende Aufgabe wird dadurch gelöst, daß das Abgas in einem Sprühabsorber mit einer Ca(OH)₂-Suspension behandelt wird, daß das Abgas anschließend in zwei Stufen filtriert wird, wobei das aus der ersten Filtrationsstufe austretende Abgas noch einen SO₂-Gehalt von 20 bis 500 mg/Nm³ hat und wobei vor der zweiten Filtrationsstufe Aktivkohle, vorzugsweise Herdofenkoks, in den Abgasstrom eingebracht wird, und daß das Abgas schließlich mit einer Mischung gewaschen wird, die Wasser sowie NaOH, Na₂CO₃, Ca(OH)₂ und/oder CaCO₃ in gelöster oder suspendierter Form enthält. Im Sprühabsorber wird nicht nur der größte Teil der sauren Schadstoffe SO₂, HCl und HF, sondern auch ein großer Teil des Flugstaubs, der Schwermetalle, der Schwermetallverbindungen, des NOₓ und der Dioxine und Furane abgeschieden. Allerdings ist die Schadstoffkonzentration in den Abgasen, die den Sprühabsorber verlassen, immer noch so hoch, daß die Abgase weiteren Reinigungsschritten unterworfen werden müssen. Dies geschieht zunächst in zwei Filtrationsstufen, wobei in der ersten Filtrationsstufe eine Abtrennung der aus dem Sprühabsorber ausgetragenen Feststoffteilchen erfolgt. In der ersten Filtrationsstufe findet auch eine Nachreaktion zwischen den sauren Bestandteilen SO₂, HCl und HF mit dem aus dem Sprühabsorber ausgetragenen Ca(OH)₂ statt. Das die erste Filtrationsstufe verlassende Abgas enthält aber insbesondere noch Quecksilber und SO₂ in Konzentrationen, die in den nachfolgenden Reinigungsstufen zu entfernen sind. Daher wird dem Abgasstrom vor dem Eintritt in die zweite Filtrationsstufe Aktivkohle zugemischt, die dann in der zweiten Filtrationsstufe aus dem Abgasstrom abgetrennt wird. Im Filterkuchen der zweiten Filtrationsstufe erfolgt eine weitgehende Oxidation des SO₂ zu SO₃ und eine gleichzeitige Abscheidung insbesondere des metallischen Quecksilbers. Die aus der zweiten Filtrationsstufe austretenden Abgase sind quecksilberfrei und haben eine SO₂-Konzentration, die eine wirtschaftliche Nachreinigung in einem Wäscher ermöglicht, denn die nachgeschaltete Waschstufe hat nur die Aufgabe, geringe SO₂-Mengen aus dem Abgas zu entfernen, wofür auch relativ teuere Sorptionsmittel verwendet werden können. Es kommt hinzu, daß der Filterkuchen der zweiten Filtrationsstufe in vorteilhafter Weise keine festen Reaktionsprodukte aus dem Sprühabsorber enthält.

Obwohl aus der DE-PS 26 03 807 ein Verfahren zum Entfernen von Quecksilber aus Gasen mit imprägnierter regenerierbarer Aktivkohle bekannt ist, bei dem die Aktivkohle zur Verbesserung der Quecksilberabscheidung je 100 g mit 5 bis 50 g Schwefelsäure und 0,1 bis 5 g Jodionen imprägniert ist, und obwohl in der EP-OS 0 411 412 vorgeschlagen wird, mit Quecksilber und Schwefelverbindungen verunreinigte Abgase in einem mit Aktivkohle gefüllten Festbettabsorber zu reinigen, wurde überraschenderweise gefunden, daß bereits ein SO₂-Gehalt von 20 bis 500 mg/Nm³ Abgas ausreicht, um die Quecksilberabscheidung durch Adsorption an Aktivkohle so weit zu fördern, daß praktisch eine quantitative Abscheidung des Quecksilbers, insbesondere des metallischen Quecksilbers, in einem Filterkuchen erreicht wird, der nur aus einer vergleichsweise dünnen Aktivkohleschicht besteht.

Um den Sprühabsorber von größeren Staubmengen zu entlasten, ist nach der Erfindung vorgesehen, daß das Abgas vor dem Eintritt in den Sprühabsorber bei 200 bis 500°C in einem Zyklon und/oder Elektrofilter entstaubt wird. Durch diese Maßnahme wird erreicht, daß der größte Teil des Staubs, bei dem es sich um Flugasche handelt, separat abgeschieden wird und daß das im Sprühabsorber erzeugte feste Reaktionsprodukt weitgehend frei von Flugasche ist. Diese Trennung der einzelnen Verfahrensprodukte eröffnet Vorteile bei ihrer Deponierung.

Das erfindungsgemäße Verfahren kann besonders vorteilhaft durchgeführt werden, wenn das aus der ersten Filtrationsstufe austretende Abgas einen SO₂-Gehalt von 100 bis 300 mg/Nm³ hat, da dieser SO₂-Gehalt eine nahezu quantitative Abscheidung des Quecksilbers zuverlässig gewährleistet.

Ferner ist nach der Erfindung vorgesehen, daß die beiden Filtrationsstufen in voneinander getrennten Gewebefiltern durchgeführt werden oder daß die erste Filtrationsstufe in einem Elektrofilter und die zweite Filtrationsstufe in einem Gewebefilter durchgeführt wird. Die Anwendung von zwei Gewebefiltern erlaubt eine besonders zuverlässige Abtrennung der staubförmigen Feststoffteilchen, während die Ausgestaltung der ersten Filtrationsstufe als Elektrofilter eine kostengünstige Lösung darstellt, die insbesondere dann zur Anwendung kommt, wenn das den Sprühabsorber verlassende Abgas einen relativ geringen Feststoffgehalt aufweist. Die Ausgestaltung der zweiten Filtrationsstufe als Gewebefilter hat sich als besonders vorteilhaft erwiesen, da sich auf dem Gewebefilter eine relativ dünne Aktivkohleschicht ablagert, die in Verbindung mit dem erfindungsgemäßen SO₂-Gehalt des der zweiten Filtrationsstufe zugeführten Abgasstroms ausreicht, um eine nahezu quantitative Abscheidung des Quecksilbers zu gewährleisten.

Entsprechend der Erfindung werden vor der zweiten Filtrationsstufe 0,03 bis 1 g Aktivkohle pro Nm³ Abgas in den Abgasstrom eingebracht. Diese vergleichsweise geringe Menge an Aktivkohle sichert bei hoher Abscheideleistung für Quecksilber einen wirtschaftlichen Verfahrensbetrieb.

Nach der Erfindung ist weiter vorgesehen, daß die zum Waschen des Abgases verwendete Mischung einen pH-Wert von 4,5 bis 8 hat. Diese Fahrweise der Waschstufe minimiert den Chemikalienverbrauch und gewährleistet gleichzeitig eine weitgehende Abscheidung der sauren Schadstoffe SO₂, HCl und HF, die noch in den Abgasen enthalten sind, welche die zweite Filtrationsstufe verlassen.

In zweckmäßiger Ausgestaltung der Erfindung ist vorgesehen, daß das Abgas in den Sprühabsorber mit einer Temperatur von 200 bis 500°C eintritt und den Sprühabsorber mit einer Temperatur von 60 bis 180°C verläßt. Die Temperatur des den Sprühabsorber verlassenden Abgasstroms kann niedrig gewählt werden, wenn das Abgas wenig HCl enthält, und sie muß höher gewählt werden, wenn der HCl-Gehalt im Abgasstrom großer ist. In zweckmäßiger Ausgestaltung der Erfindung ist auch vorgesehen, daß das in die zweite Filtrationsstufe eintretende Abgas eine Temperatur von 60 bis 180°C hat. Es ist also sicherzustellen, daß in der ersten Filtrationsstufe keine Temperaturabsenkung des Abgasstroms erfolgt.

Als besonders vorteilhaft hat es sich erwiesen, wenn die Aktivkohle einen mittleren Teilchendurchmesser von 1 bis 200 µm, vorzugsweise 1 bis 80 µm, hat, da dieser Teilchendurchmesser eine gute Einbringung der Aktivkohle in den Abgasstrom und eine optimale Adsorptionsleistung der Aktivkohle in der zur Verfügung stehenden Reaktionszeit zuläßt.

Um die Sicherheit des erfindungsgemäßen Verfahrens zu erhöhen, ist vorgesehen, daß der Aktivkohle CaCO₃ und/oder Flugasche zugemischt werden, wobei das Gewichtsverhältnis von Aktivkohle zu CaCO₃ und/oder Flugasche 1 : 0,3 bis 1 : 5 beträgt. Diese Substanzen haben einen Verdünnungseffekt und vermeiden zuverlässig eine Selbstentzündung der Aktivkohle.

Schließlich ist nach der Erfindung vorgesehen, die dem Sprühabsorber zugeführte Masse an Ca(OH)₂ kontinuierlich so zu regeln, daß das in die zweite Filtrationsstufe eintretende Abgas einen SO₂-Gehalt im Bereich von 20 bis 500 mg/Nm³, vorzugsweise 100 bis 300 mg/Nm³, aufweist. Es wurde gefunden, daß der SO₂-Gehalt des in die zweite Filtrationsstufe eintretenden Abgasstroms als Regelgröße für die Zufuhr der Ca(OH)₂-Suspension in den Sprühabsorber verwendet werden kann, da die SO₂-Absorption im Sprühabsorber bei nahezu konstanter Temperatur relativ schnell erfolgt, so daß der Regelvorgang eine geringe Trägheit hat.

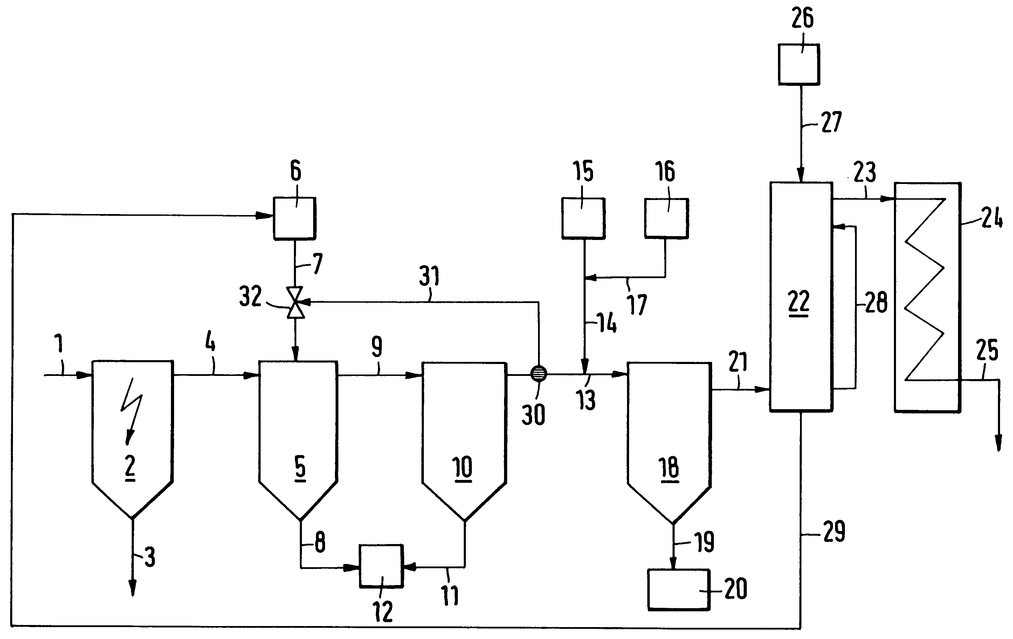

Der Gegenstand der Erfindung wird nachfolgend anhand der Zeichnung und eines Ausführungsbeispiels näher erläutert.

Das Abgas einer Verbrennungsanlage für Klärschlamm hatte einen Staubgehalt von 14 000 mg/Nm³, einen SO₂-Gehalt von 1500 mg/Nm³, einen HCl-Gehalt von 80 mg/Nm³, einen HF-Gehalt von 10 mg/Nm³ und einen Quecksilbergehalt von 1,5 mg/Nm³, wobei der Quecksilbergehalt weitgehend als dampfförmiges, metallisches Quecksilber im Abgas vorlag. Das Abgas gelangte mit einer Temperatur von 300°C über die Leitung (1) in das Elektrofilter (2), wo der größte Teil des Staubs abgeschieden und über die Leitung (3) ausgetragen wurde. Aus dem Elektrofilter (2) gelangte das vorentstaubte Abgas über die Leitung (4) in den Sprühabsorber (5). Das vorentstaubte Abgas hatte noch einen Reststaubgehalt von 300 mg/Nm³ und eine Temperatur von 250°C.

Dem Sprühabsorber (5) wurde über die Leitung (7) aus dem Vorratsbehälter (6) eine wäßrige Suspension von Ca(OH)₂ zugeführt. Im Sprühabsorber (5) verdampfte das Wasser, und über die Leitung (8) wurde dem Vorratsbunker (12) das feste Reaktionsprodukt zugeführt, das den größten Teil des SO₂, des HCl und des HF enthielt. Außerdem enthielt das feste Reaktionsprodukt noch geringe Mengen an Ca(OH)₂. Das den Sprühabsorber (5) über die Leitung (9) verlassende Abgas hatte eine Temperatur von 110°C und einen SO₂-Gehalt von 120 mg/Nm³.

Das in der Leitung (9) geführte Abgas gelangte in das Gewebefilter (10), das bei einer Temperatur von ca. 110°C betrieben wurde. Im Gewebefilter (10) wurden die aus dem Sprühabsorber mit dem Abgas ausgetragenen festen Reaktionsprodukte abgeschieden und über die Leitung (11) in den Vorratsbunker (12) gefördert. Der Vorratsbunker (12) enthielt ein einheitliches Reaktionsprodukt, das auch noch geringe Staubanteile aufwies. Das Abgas gelangte aus dem Gewebefilter (10) über die Leitung (13) in das Gewebefilter (18). Die Abgasleitung (13) wies eine Mischstrecke auf, in die pulverförmige Aktivkohle mit einer Teilchengröße von 1 bis 50 µm in einer Menge von 250 mg/Nm³ Abgas aus dem Vorratsbunker (15) über die Leitung (14) eingebracht wurde. Außerdem wurden dem in der Leitung (13) geführten Abgasstrom aus dem Vorratsbunker (16) über die Leitungen (17) und (14) 700 mg Flugasche zugemischt, um die Betriebssicherheit des Gewebefilters (18) zu erhöhen. Die im Vorratsbunker (16) befindliche Flugasche entstammte dem Elektrofilter (2). Das in der Leitung (13) geführte Abgas hatte einen SO₂-Gehalt von 100 mg/Nm³ und einen Quecksilbergehalt von 1,5 mg/Nm³. Im Gewebefilter (18) wurde die Aktivkohle periodisch abgeschieden und dem Vorratsbunker (20) über die Leitung (19) zugeführt. Das aus dem Gewebefilter (18) austretende Abgas hatte einen SO₂-Gehalt von 40 mg/Nm³ und gelangte über die Leitung (21) in den Wäscher (22), der mit einer Lösung aus NaOH und Na₂CO₃ betrieben wurde. Diese Lösung wurde dem Wäscher (22) aus dem Vorratsgefäß (26) über die Leitung (27) in einer solchen Menge zugeführt, daß im Wäscher ständig ein pH-Wert von ca. 7,5 aufrechterhalten blieb. Die Waschlösung wurde im internen Waschkreislauf (28) umgepumpt. Über die Leitung (29) wurde dem Wäscher (22) ständig ein Teilstrom der Waschlösung entnommen und dem Vorratsgefäß (6) und damit dem Sprühabsorber (5) zugeführt. Die dem Wäscher (22) entnommene Waschlösung wurde durch frische Waschlösung über die Leitung (27) entsprechend ergänzt.

Das aus dem Wäscher (22) über die Leitung (23) austretende Abgas wurde im Wärmeaustauscher (24) auf eine Temperatur von ca. 110°C aufgeheizt und gelangte über die Leitung (25) in einen Kamin. Der Wärmeaustauscher (24) nutzte den Wärmeinhalt eines Teilstroms der Verbrennungsabgase, was in der Zeichnung nicht dargestellt ist. Das in der Leitung (25) geführte gereinigte Abgas hatte einen Staubgehalt < 10 mg/Nm³, einen SO₂-Gehalt < 30 mg/Nm³, einen HCl-Gehalt < 5 mg/Nm³ und einen HF-Gehalt < 1 mg/Nm³. Der Gehalt an Quecksilber, Quecksilberverbindungen sowie polyhalogenierten Dibenzodioxinen und Dibenzofuranen lag in dem in der Leitung (25) geführten Abgas unter 0,05 mg/Nm³ bzw. unter 0,1 ng/Nm³.

Zur Regelung des Abgasreinigungsverfahrens wurde der SO₂-Gehalt des in der Leitung (13) geführten Abgasstroms vom Analysator (30) kontinuierlich gemessen. Sank der SO₂-Gehalt unter den Soll-Wert von 100 mg/Nm³, wurde das Ventil (32) über die Steuerleitung (31) so gesteuert, daß über die Leitung (7) eine Verminderung der Ca(OH)₂-Zufuhr zum Sprühabsorber (5) erfolgte. Stieg der SO₂-Gehalt des in der Leitung (13) geführten Abgasstroms auf einen Wert über 100 mg/Nm³, wurde die Zufuhr von Ca(OH)₂ zum Sprühabsorber (5) über die Leitung (7) entsprechend erhöht. Der überwiegende Teil des in das Gewebefilter (18) eintretenden SO₂ wurde durch die katalytische Wirkung der Aktivkohle von dem im Abgas enthaltenen Sauerstoff zu SO₃ oxidiert und als H₂SO₄ von der Aktivkohle adsorbiert. Gleichzeitig erfolgte eine sehr schnelle und nahezu quantitative Adsorption des im Abgas enthaltenen Quecksilbers. Die im Vorratsbunker (20) gesammelte beladene Aktivkohle wurde zur besseren Ausnutzung der Adsorptionskapazität in das Gewebefilter (18) zurückgeführt; ein Teilstrom der beladenen Aktivkohle wurde dem Vorratsbunker ständig entnommen und deponiert.

## Patentansprüche

1. Verfahren zur Reinigung von sauerstoffhaltigem Abgas, das bei der Verbrennung von Müll, Industrieabfällen und Klärschlamm anfällt und das mit Staub, SO₂, HCl, HF, Schwermetallen, insbesondere Hg und Quecksilberverbindungen, sowie mit Dioxinen und Furanen verunreinigt ist, dadurch gekennzeichnet, daß das Abgas in einem Sprühabsorber mit einer Ca(OH)₂-Suspension behandelt wird, daß das Abgas anschließend in zwei Stufen filtriert wird, wobei das aus der ersten Filtrationsstufe austretende Abgas noch einen SO₂-Gehalt von 20 bis 500 mg/Nm³ hat und wobei vor der zweiten Filtrationsstufe Aktivkohle, vorzugsweise Herdofenkoks, in den Abgasstrom eingebracht wird, und daß das Abgas schließlich mit einer Mischung gewaschen wird, die Wasser sowie NaOH, Na₂CO₃, Ca(OH)₂ und/oder CaCO₃ in gelöster oder suspendierter Form enthält.

2. Verfahren nach Anspruch 1, dadurch gekennzeichnet, daß das Abgas vor dem Eintritt in den Sprühabsorber bei 200 bis 500°C in einem Zyklon und/oder Elektrofilter entstaubt wird.

3. Verfahren nach den Ansprüchen 1 bis 2, dadurch gekennzeichnet, daß das aus der ersten Filtrationsstufe austretende Abgas einen SO₂-Gehalt von 100 bis 300 mg/Nm³ hat.

4. Verfahren nach den Ansprüchen 1 bis 3, dadurch gekennzeichnet, daß die beiden Filtrationsstufen in voneinander getrennten Gewebefiltern durchgeführt werden.

5. Verfahren nach den Ansprüchen 1 bis 3, dadurch gekennzeichnet, daß die erste Filtrationsstufe in einem Elektrofilter und die zweite Filtrationsstufe in einem Gewebefilter durchgeführt wird.

6. Verfahren nach den Ansprüchen 1 bis 5, dadurch gekennzeichnet, daß vor der zweiten Filtrationsstufe 0,03 bis 1 g Aktivkohle pro Nm³ Abgas in den Abgasstrom eingebracht werden.

7. Verfahren nach den Ansprüchen 1 bis 6, dadurch gekennzeichnet, daß die zum Waschen des Abgases verwendete Mischung einen pH-Wert von 4,5 bis 8 hat.

8. Verfahren nach den Ansprüchen 1 bis 7, dadurch gekennzeichnet, daß das Abgas in den Sprühabsorber mit einer Temperatur von 200 bis 500°C eintritt und den Sprühabsorber mit einer Temperatur von 60 bis 180°C verläßt.

9. Verfahren nach den Ansprüchen 1 bis 8, dadurch gekennzeichnet, daß das in die zweite Filtrationsstufe eintretende Abgas eine Temperatur von 60 bis 180°C hat.

10. Verfahren nach den Ansprüchen 1 bis 9, dadurch gekennzeichnet, daß die Aktivkohle einen mittleren Teilchendurchmesser von 1 bis 200 µm, vorzugsweise 1 bis 80 µm, hat.

11. Verfahren nach den Ansprüchen 1 bis 10, dadurch gekennzeichnet, daß der Aktivkohle CaCO₃ und/oder Flugasche zugemischt werden, wobei das Gewichtsverhältnis von Aktivkohle zu CaCO₃ und/oder Flugasche 1 : 0,3 bis 1 : 5 beträgt.

12. Verfahren nach den Ansprüchen 1 bis 11, dadurch gekennzeichnet, daß die dem Sprühabsorber zugeführte Masse an Ca(OH)₂ kontinuierlich so geregelt wird, daß das in die zweite Filtrationsstufe eintretende Abgas einen SO₂-Gehalt im Bereich von 20 bis 500 mg/Nm³, vorzugsweise 100 bis 300 mg/Nm³, aufweist.
